Europäisches Patentamt

(19) European Patent Office

Office européen des brevets

(11) EP 0 703 194 B1

(12) FASCICULE DE BREVET EUROPEEN

(45) Date de publication et mention
de la délivrance du brevet:
**28.04.1999  Bulletin 1999/17**

(51) Int. Cl.$^6$: **C02F 3/30**

(21) Numéro de dépôt: **95402094.7**

(22) Date de dépôt: **18.09.1995**

(54) **Procédé de régulation de l'aération d'un bassin traitement biologique d'eaux usées**

Verfahren zur Steuerung der Belüftung eines Beckens für biologische Abwasseraufbereitung

Process for controlling aeration of a tank for biological waste water treatment

(84) Etats contractants désignés:
**AT BE DE ES FR GB IT**

(30) Priorité: **20.09.1994 FR 9411180**

(43) Date de publication de la demande:
**27.03.1996  Bulletin 1996/13**

(73) Titulaire: **LYONNAISE DES EAUX**
**92000 Nanterre (FR)**

(72) Inventeurs:
• **Lefevre, Fanny**
**F-78300 Poissy (FR)**
• **Audic, Jean-Marc**
**F-78700 Conflans Sainte Honorine (FR)**

(74) Mandataire:
**Roger-Petit, Georges et al**
**Office Blétry**
**2, boulevard de Strasbourg**
**75010 Paris (FR)**

(56) Documents cités:
EP-A- 0 396 057          DE-A- 2 935 120
US-A- 5 304 308

• WATER SCIENCE TECHNOLOGY, vol.28, no.10, Octobre 1993, LONDON GB pages 289 - 298 F.LEFEVRE ET AL. 'AUTOMATIC REGULATION OF ACTIVATED SLUDGE AERATION - SINGLE-TANK NITRIFICATION-DENITRIFICATION'
• CHEMICAL ABSTRACTS, vol. 122, no. 8, 20 Février 1995, Columbus, Ohio, US; abstract no. 88577, TSUMURA, KAZUYUKI ET AL. 'METHOD FOR ADDING ORGANIC COMPOUNDS IN INTERMITTENT AERATION ACTIVE SLUDGE WASTEWATER TREATMENT' & DATABASE WPI Week 9442, Derwent Publications Ltd., London, GB; AN 94-337606 & JP-A-6 262 197 (FUJI ELECTRIC CO. LTD. & UNITIKA LTD.) 20 Septembre 1994
• D.G. WAREHAM ET AL: "Real-Time Control of Aerobic-Anoxic Sludge Digestion Using ORP" , 08-07-1991, ASCE NATIONAL CONFERENCE ON ENVIRONMENT ENGINEERING, RENO, NEVADA
• G. LADIGES: "Betriebsergebnisse der Kläranlage Salzgitter-Bad" 47, 16-03-1989, INST. F. SIEDLUNGSWASSERWIRTSCHAFT,

Printed by Xerox (UK) Business Services
2.16.7/3.6

**Description**

L'invention concerne un procédé de régulation de l'aération d'un bassin de traitement biologique d'eaux usées, mettant en oeuvre une étape d'élimination du carbone, une étape de nitrification et une étape de dénitrification.

L'application de la directive européenne sur l'assainissement des agglomérations cherche à limiter le rejet dans le milieu naturel d'eaux usées non traitées. Les stations de traitement devront notamment épurer complètement toutes les eaux collectées, à l'exception de celles dues à des événements pluvieux exceptionnels. En outre, une plus grande fiabilité des ouvrages sera exigée. Le rejet dans le milieu naturel d'un effluent de qualité constante est à respecter dans un contexte où les eaux usées à traiter varient de manière très importante tant en ce qui concerne la charge polluante que le débit. Il est donc nécessaire pour maintenir la station d'épuration dans le meilleur état de fonctionnement possible, d'adapter en permanence les critères d'exploitation pour répondre à un événement modifiant les conditions d'exploitation du traitement biologique.

Un grand nombre de stations d'épuration par boues activées comportent un seul bassin de traitement dans lequel s'effectuent l'élimination de la pollution carbonée ainsi qu'une nitrification au moins partielle. Le respect de la directive européenne oblige dans certains cas à une nitrification totale et à une dénitrification. Les trois opérations de traitement peuvent s'effectuer dans un bassin unique qui fonctionne alors par alternance de phases d'aération pour l'élimination du carbone et la nitrification et de phases d'anoxie pour la dénitrification.

Or, une des principales causes de dysfonctionnement des stations de ce type est une mauvaise adaptation des apports en oxygène, qu'il s'agisse d'un manque en quantité ou d'une distribution inappropriée de l'oxygène dans le temps, entraînant de mauvais résultats du traitement. On peut également aboutir à des pertes de boues se produisant à la suite d'une dénitrification spontanée dans le clarificateur situé en aval du bassin de traitement biologique, ainsi qu'à des phénomènes d'anaérobiose dans le bassin de traitement dus à une sous-oxygénation de certaines zones entraînant à long terme l'apparition de bactéries filamenteuses puis de mousses.

Il a donc été mis au point des dispositifs de régulation de l'aération de tels bassins de traitement mais qui présentent encore quelques inconvénients.

L'utilisation de doseurs cycliques ou d'horloges n'apporte qu'une solution partielle car les dispositifs sont calés sur un fonctionnement moyen préétabli qui ne s'adapte pas aux variations. Il y a donc de sérieux risques par exemple d'anaérobiose entraînant rapidement une détérioration du milieu biologique.

L'utilisation de capteurs mesurant l'oxygène dissous ou le potentiel d'oxydoréduction ainsi que de diverses combinaisons de capteurs sert à détecter des valeurs de référence, le seuil haut permettant d'arrêter le fonctionnement des dispositifs d'aération et le seuil bas permettant de relancer le fonctionnement des dispositifs d'aération. Des dispositifs temporisateurs sont utilisés lorsque ces seuils ne sont pas atteints.

Afin d'optimiser les réactions de nitrification et de dénitrification, il est essentiel d'apporter l'oxygène quand il faut et en quantité suffisante, et non simplement d'apporter de l'oxygène comme le font les systèmes décrits préalablement.

Une première amélioration des systèmes existants a consisté à mesurer en continu le potentiel d'oxydoréduction du milieu et à analyser l'allure de la courbe de ce potentiel en fonction du temps EH = f (temps) , cf. 2nd International Specialized Conference on Design and Operation of Small Wastewater Treatment Plants, Trondheim. Norway, 28-30 June 1993, "Automatic Regulation of Activated Sludge Aeration (F. Lefevre et al.) et Nat. Sci. Tech. 28, 10, 289-298 (1993).

L'analyse se fait par calcul de la dérivée et étude de cette dérivée. Si la dérivée est positive, cela signifie une augmentation du potentiel d'oxydoréduction. Si la dérivée est négative, cela correspond à une diminution du potentiel d'oxydoréduction en phase d'anoxie. Lorsque la dérivée est nulle, on se trouve dans une phase de stabilisation.

Le système calcule alors la durée d'aération ou de non-aération à prévoir qui est égale à la durée d'aération ou de non-aération nécessaire pour amener le potentiel d'oxydoréduction à la valeur requise pour effectuer soit l'élimination du carbone soit la nitrification soit la dénitrification plus le temps complémentaire nécessaire pour effectuer la réaction.

Un tel système présente cependant des inconvénients car la courbe du potentiel d'oxydoréduction peut prendre une allure asymptotique (dérivée tendant vers 0). Or, pour certaines valeurs du potentiel d'oxydoréduction, il faut absolument éviter le passage à une phase de quasi-stabilisation car les conditions sont sinon catastrophiques pour la préservation de la biomasse, au moins inappropriées au traitement recherché.

L'invention résoud donc le problème en fournissant un procédé de régulation de l'aération d'un traitement biologique d'eaux usées mettant en oeuvre une étape d'élimination du carbone en aérobiose, une étape de nitrification en aérobiose, et une étape de dénitrification en anoxie, dans lequel on mesure en permanence le potentiel d'oxydoréduction dans le système de traitement, on établit la courbe d'évolution du potentiel d'oxydoréduction en fonction du temps et on en calcule la dérivée, le procédé étant caractérisé en ce que, quand la dérivée tend vers 0, on corrèle la dérivée et la valeur du potentiel d'oxydoréduction pour déterminer la mise en marche, la poursuite ou l'arrêt de l'aération.

Selon une caractéristique supplémentaire et avantageuse, on détermine la durée de l'aération en tenant compte en outre des événements antérieurs (étapes précédentes d'élimination du carbone, de nitrification ou de dénitrification).

D'autres caractéristiques et avantages de la présente invention paraîtront à la lecture de la description détaillée suivante faite en référence aux dessins annexés dans lesquels

la figure 1 est un exemple de courbe de potentiel d'oxydoréduction en fonction du temps,
la figure 2 est une représentation schématique de la gamme du potentiel d'oxydoréduction découpée en plusieurs zones,
les figures 3 à 8 sont des modes de réalisation spécifiques; et
la figure 9 illustre la prise en compte des événements antérieurs.

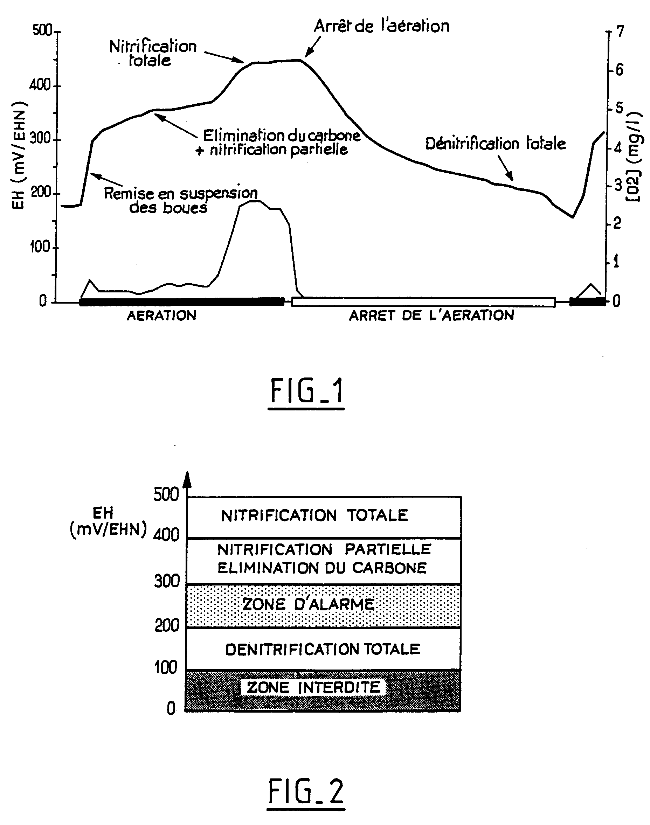

La figure 1 est un exemple type d'une courbe de potentiel d'oxydoréduction en fonction du temps et des cycles d'aération et de non-aération. On constate qu'à la fin de chaque étape biologique, la courbe prend une allure asymptotique. Ces différents "paliers" ont permis de découper la gamme de potentiel d'oxydoréduction en plusieurs zones illustrées sur la figure 2.

La zone où le potentiel d'oxydoréduction EH (c'est-à-dire le potentiel d'oxydoréduction mesuré à l'électrode à hydrogène en mV/EHN) est compris entre 0 et 100, est une zone interdite car les risques d'anaérobiose sont très importants et peuvent nuire profondément à la biomasse. Lorsque EH est compris entre 100 et 200, les conditions conviennent à une dénitrification totale, car on se trouve en phase anoxique. Entre des valeurs de EH de 200 à 330, il existe une situation dangereuse qui ne doit pas durer longtemps car il n'y a pas suffisamment d'oxygène pour l'élimination du carbone et il y en a encore trop pour qu'une dénitrification s'effectue; le passage dans cette zone doit donc être aussi court que possible car aucun traitement biologique approprié ne s'effectue. Pour des valeurs de EH entre 300 et 400, se produisent l'élimination du carbone et une nitrification partielle. Au-delà de la valeur 400 de EH, on assiste à une nitrification totale dans la biomasse (Fig. 2). Les valeurs seuils données ci-dessus sont simplement indicatives et peuvent varier d'une station à une autre.

A titre d'exemple, on donnera ci-dessous des cas pratiques de détection du potentiel d'oxydoréduction EH, de son évolution dans le temps et de l'analyse qui en est faite par un automate, analyse suivie d'une décision d'action sur l'aération.

On décrira tout d'abord succinctement le cas où la valeur absolue de la dérivée est relativement élevée, ce qui correspond à une montée ou une descente du potentiel redox rapide.

En phase d'aération, si la valeur EH dépasse rapidement (Tmontée <30 minutes) la valeur 450 mV/EHN, on considère que le milieu biologique est parfaitement oxydé et peu demandeur en oxygène. Il n'est donc pas nécessaire d'aérer longtemps et le temps de fonctionnement des dispositifs d'aération est limité à par exemple 30 minutes.

En phase de non-aération, si EH atteint rapidement la valeur consigne minimale (100 mV/EHN, valeur seuil de la zone interdite), il y a remise automatique en marche des dispositifs d'aération.

Lorsque la dérivée est nulle, on se trouve en phase de stabilisation qui a été programmée en fonction des mesures qui ont préalablement été faites et analysées, comme on le décrit ci-dessous.

I <u>PHASE D'AERATION ; ATTEINTE LENTE DE LA VALEUR EH = 450 mV/EHN</u> (Tmontée > 60 min)

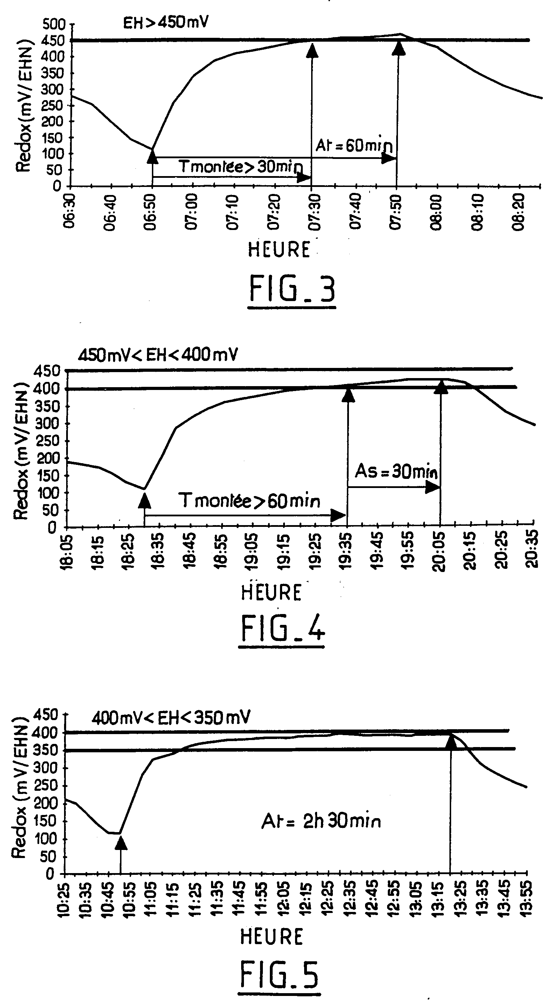

La valeur requise de EH étant atteinte, le système antérieur aurait considéré que l'oxygénation était bonne et aurait programmé un temps d'aération relativement court, par exemple 30 minutes. Selon la présente invention, tant que la valeur de la dérivée n'est pas nulle, il est considéré que pour cette valeur de EH, le système est bien oxygéné mais qu'il y a toutefois encore une certaine demande en oxygène et il est programmé une phase d'aération At plus longue, par exemple 60 minutes (Fig.3).

II <u>PHASE D'AERATION : EH = 400 mV/EHN EST ATTEINT LENTEMENT (PAR EXEMPLE PLUS DE 60 MINUTES)</u>

On considère que, dès que la valeur EH = 400 mV/EHN est atteinte, la réaction de nitrification est terminée et il suffit de laisser le temps minimum d'aération pour permettre la stabilisation des populations bactériennes. Ce temps de stabilisation As sera généralement de 30min (Fig.4).

On notera que, lorsque cette valeur de EH est atteinte plus rapidement (valeur absolue de la dérivée relativement forte), le temps d'aération supplémentaire sera supérieur afin de permettre aux populations bactériennes d'atteindre l'équilibre souhaité.

III <u>PHASE D'AERATION : 350 mV/EHN < EH < 400 mV/EHN</u>

Dans cette zone, la nitrification ne s'effectue que partiellement. n est toutefois nécessaire d'aérer de manière à terminer l'oxydation de la pollution carbonée et à amorcer les réactions de nitrification. Cependant, lorsque la montée en EH se fait lentement (courbe tendant vers une asymptote, donc dérivée tendant vers 0), il faut arrêter régulièrement l'aération totale (Fig.5) pour pouvoir dénitrifier le peu d'azote nitrifié.

IV <u>PHASE D'AERATION : 300 mV/EHN < EH < 350 mV/EHN</u>

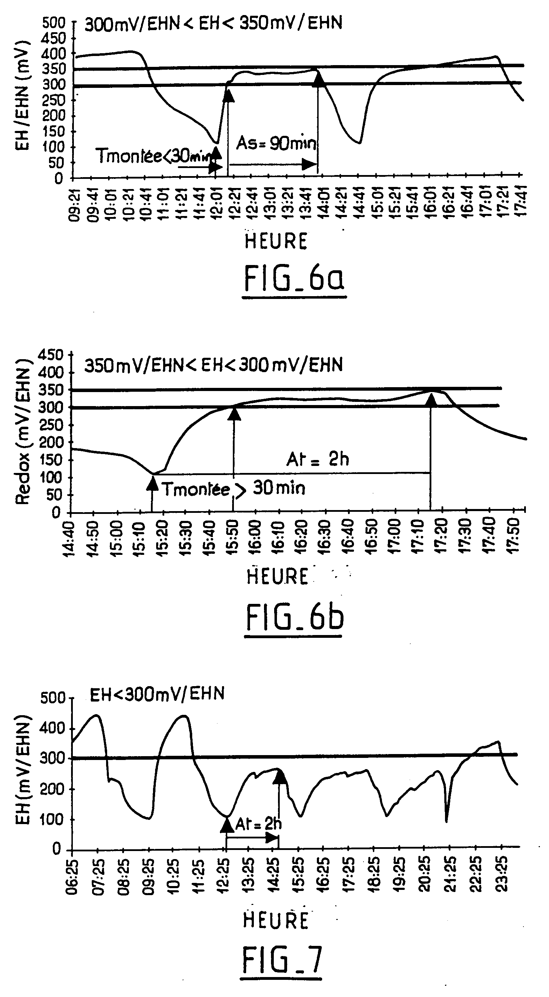

Lorsque cet intervalle de potentiel EH est atteint, on sait qu'on se trouve en présence d'un milieu mal oxydé où le traitement de la pollution carbonée n'est que partiel et la nitrification inexistante. Il est donc impératif que le milieu biologique soit le moins longtemps possible dans ces conditions. On considère toutefois que, lorsque la valeur inférieure de 300 mV/EHN est atteinte rapidement lors d'une remise en aération, le milieu est mal oxydé mais le déficit en oxygène pour l'élimination du carbone est relativement faible et que la phase de stabilisation en aération peut être de 90 minutes après la montée de EH à 300 mV/EHN (Fig.6a).

Dans le cas où la valeur de 300 mV/EHN est atteinte lentement (dérivée tendant vers 0), on limitera la phase d'aération à une valeur de 2 heures (Fig.6b). Si la valeur de 350 mV/EHN n'est pas atteinte et dépassée après plusieurs cycles d'aération (généralement après 3 cycles d'aération), l'automate se déconnecte et émet un signal d'alerte indiquant une incohérence de fonctionnement du dispositif. Une telle incohérence peut être due à un problème au niveau de l'électrode à hydrogène, au niveau des dispositifs d'aération (problèmes électromécaniques, défaillance des systèmes de diffusion d'air), ou au niveau de la station, arrivée d'une surcharge inhabituelle de pollution carbonée et/ou azotée, accroissement important de la concentration en boues, etc., augmentant fortement la demande en oxygène du système.

V PHASE D'AERATION : EH < 300 mV/EHN

Lorsque la valeur du redox reste inférieure à 300 mV/EHN, la durée de la phase d'aération sera limitée à, par exemple, 120 minutes (Fig.7). En outre, si cette situation persiste après par exemple 3 cycles d'aération, l'automate se déconnecte et émet un signal d'alerte car cette zone ne permet pas l'élimination du carbone et ne permet pas la dénitrification, il est donc inutile de laisser le milieu biologique dans ces conditions pendant un temps trop important car aucune réaction appropriée ne se produit.

Pendant les phases de non-aération séparant les phases d'aération dans lesquelles le système est géré comme indiqué ci-dessus, la valeur du potentiel d'oxydoréduction EH diminue et est gérée comme décrit ci-dessous.

Bien entendu, comme la réaction de dénitrification ne peut se faire que lorsque la nitrification a été effectuée, le système ne rentrera en fonction que lorsque la valeur EH aura atteint des valeurs supérieures à 350 mV/EHN.

VI PHASE DE NON-AERATION : EH < 200 mV/EHN

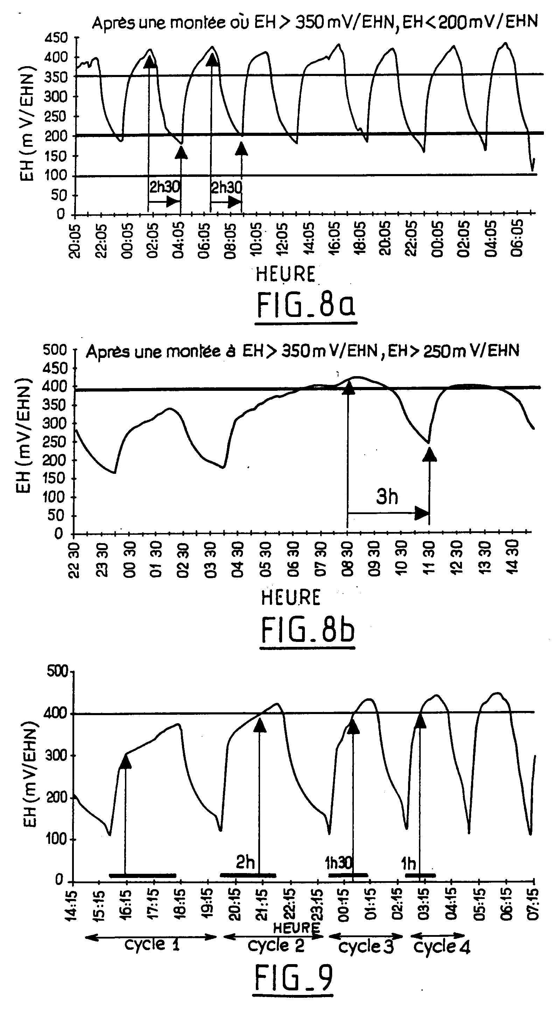

Si EH descend lentement à une valeur inférieure à 200 mV/EHN sans jamais atteindre la valeur de consigne (100 mV/EHN), la phase de non-aération sera interrompue après une durée suffisante, par exemple 2 h 30 (Fig.8a). De même, si EH descend à une valeur qui reste supérieure à 200 mV/EHN avec une dérivée qui tend vers 0, il y a reprise de l'aération au bout d'un certain temps, par exemple après 3 heures d'arrêt (Fig.8b). Dans les deux cas, l'aération est remise en route pour éviter tout arrêt prolongé entraînant une décantation des boues.

Dans le cas où EH descend à une valeur inférieure à 200 mV/EHN, il est important de limiter la phase de non-aération à une valeur relativement faible, car, compte tenu de l'imprécision de la mesure de la valeur de consigne (± 25 mV), il se pourrait que l'on se trouve dans la zone interdite ou dans une zone très proche de la zone interdite sans que se déclenche automatiquement la marche des dispositifs d'aération. Si la valeur de EH reste au-dessus de 200 mV/EHN, on peut se permettre de rester plus longtemps dans cette zone car il y a nettement moins de risques d'anaérobiose.

VII PHASE D'AERATION Prise en compte des événements antérieurs

La prise en compte des événements antérieurs est particulièrement avantageuse lors d'une surcharge de pollution. Lorsqu'un cycle d'aération ne permet pas de traiter cette surcharge de façon satisfaisante, l'automate en tient compte lors de l'analyse effectuée dans les cycles suivants ainsi que le montre l'exemple suivant se référant à la figure 9.

Cycle 1 : l'arrivée d'une surcharge de pollution ne permet pas au système biologique de traiter l'intégralité de la pollution entrante : il se constitue donc un stock de pollution non dégradée. L'évolution du redox montre que la nitrification n'est que partielle, il y a donc un résiduel d'ammoniac dans le système biologique (estimé à partir de la valeur du redox atteint).

Cycle 2 : l'évolution du redox montre que la nitrification s'effectue cette fois-ci totalement : le temps total d'aération 2h est calculé en fonction de la vitesse de montée du redox et du résiduel de nitrates accumulés lors de la séquence précédente de par exemple 2h30 d'aération.

Cycle 3 : le redox atteint plus rapidement 300 et 400 mV/EHN ce qui traduit une nitrification plus rapide et complète : le temps d'aération est calculé en fonction de la vitesse de montée du redox et du résiduel de nitrates encore présent : les temps d'aération sont réduits à par exemple 1 h 30. Si le résiduel est reconnu comme nul (valeur du redox atteint), l'automate reprend son analyse normale (comme décrite dans les pages précédentes).

Cycle 4 : l'analyse reprend son cours normal, la nitrification étant rapide et totale, il n'y a plus de résiduel d'ammoniac.

La mise en oeuvre du procédé selon l'invention se fait en utilisant :

(1) une sonde redox dont on sait qu'elle a une grande fiabilité dans le temps.

(2) un automate recevant en continu le signal de mesure fourni par la sonde ou capteur redox,

traitant les valeurs obtenues permettant de suivre l'évolution du potentiel EH en fonction du temps et calculant la dérivée,
programmant la durée d'aération en fonction des données reçues et la commande du démarrage ou de l'arrêt de l'aération.

Le système peut être couplé à des temporisateurs permettant par mesure de sécurité de limiter la durée de marche des dispositifs d'aération à une valeur fixée afin d'éviter une consommation excessive d'énergie quand les conditions de nitrification ne sont pas réunies, et d'arrêt des dispositifs d'aération à une valeur permettant d'éviter une trop longue décantation des boues.

Bien entendu d'autres alarmes peuvent être envisagées et ne modifient pas de façon fondamentale le principe de fonctionnement du système tel que décrit précédemment.

## Revendications

1. Procédé de régulation de l'aération d'un traitement biologique d'eaux usées mettant en oeuvre une étape d'élimination du carbone en aérobiose, une étape de nitrification en aérobiose et une étape de dénitrification en anoxie, procédé dans lequel on mesure en permanence le potentiel d'oxydoréduction dans un système de traitement, on établit la courbe d'évolution du potentiel d'oxydoréduction en fonction du temps et on en calcule la dérivée, caractérisé en ce que, lorsque la dérivée tend vers 0, on corrèle la dérivée et la valeur du potentiel d'oxydoréduction pour déterminer la mise en marche, la poursuite ou l'arrêt de l'aération.

2. Procédé selon la revendication 1, caractérisé en ce qu'on détermine la durée de l'aération en tenant compte des événements antérieurs, la durée d'aération comprenant le temps nécessaire pour amener le potentiel d'oxydoréduction à la valeur requise, plus le temps complémentaire nécessaire pour effectuer la réaction.

## Claims

1. A method of regulating aeration in biological treatment of wastewater by implementing a step of eliminating carbon in aerobiosis, a step of nitrification in aerobiosis, and a step of denitrification in an anoxia, in which method the oxidation-reduction potential is continuously measured in a treatment system, a curve is established of variation in oxidation-reduction potential as a function of time, and the derivative thereof is calculated, the method being characterized in that when the derivative tends towards zero, the derivative and the value of the oxidation-reduction potential are correlated to determine whether aeration should be started, continued, or stopped.

2. A method according to claim 1, characterized in that the duration of aeration is determined by taking earlier events into account, the duration of aeration including sufficient time to bring the oxidation-reduction potential to the required value, plus the additional time required for performing the reaction.

## Patentansprüche

1. Verfahren zur Steuerung der Belüftung bei einer biologischen Abwasserbehandlung unter Durchführung einer aeroben Entkarbonisierungphase, einer aeroben Nitrifizierungsphase und einer anaeroben Denitrifizierungphase, wobei bei dem Verfahren ständig das Redoxpotential in einem Behandlungssystem gemessen, die Kurve der Entwicklung des Redoxpotentials als Funktion der Zeit aufgenommen und deren Ableitung berechnet wird, dadurch **gekennzeichnet,** daß man, wenn die Ableitung gegen Null geht, die Ableitung und den Wert des Redoxpotentials korreliert, um den Beginn, die Fortsetzung oder die Stillsetzung der Belüftung zu bestimmen.

2. Verfahren nach Anspruch 1, dadurch **gekennzeichnet,** daß man die Belüftungsdauer unter Berücksichtigung der vorhergehenden Ereignisse bestimmt, wobei die Belüftungsdauer die Zeit, die nötig ist, um das Redoxpotential auf den erforderlichen Wert zu bringen, plus die zusätzliche Zeit, die zum Durchführen der Belüftung nötig ist, umfaßt.

## FIG_1

## FIG_2

FIG.3

FIG.4

FIG.5

FIG_6a

FIG_6b

FIG_7

Après une montée où EH > 350 mV/EHN, EH < 200 mV/EHN

HEURE

## FIG.8a

Après une montée à EH > 350 m V/EHN, EH > 250 m V/EHN

HEURE

## FIG.8b

cycle 1    cycle 2    cycle 3    cycle 4

## FIG_9

9